# EUROPÄISCHE PATENTANMELDUNG

(11) **EP 1 063 507 A2**
(43) Veröffentlichungstag der Anmeldung: **27.12.2000**
(21) Anmeldenummer: 00112331.4
(22) Anmeldetag: 09.06.2000
(51) Int. Cl.: G01M 17/007, G01M 15/00

(54) **Anordnung zur Messung und Auswertung von Wartungswerten von Kraftfahrzeugen**

(30) Priorität: 23.06.1999 DE 19928681
(71) Anmelder: Adolf Würth GmbH & Co. KG, 74653 Künzelsau (DE)
(72) Erfinder: Weidner, Karl, 74653 Ingelfingen (DE)
(74) Vertreter: Patentanwälte Ruff, Beier und Partner

(57) **Zusammenfassung**

An einem Arbeitsplatz zur Wartung und Diagnose eines Kraftfahrzeugs werden alle relevanten Daten, beispielsweise Messwerte über das Abgas des Kraftfahrzeugs, ermittelt und in eine normierte Form umgewandelt. Die Daten werden dann über eine Datenübertragungseinrichtung einem zentralen Rechner zugeleitet, wo die Messwerte dann ausgewertet werden. Das Ergebnis der Auswertung wird dann über die gleiche Datenübertragungseinrichtung an den Arbeitsplatz zurück übermittelt und dort angezeigt. Der zentrale Rechner kann mit einer Vielzahl von Arbeitsstationen verbunden werden. Der zentrale Rechner enthält nicht nur die jeweils neuesten Daten der betroffenen Kraftfahrzeuge, sondern auch das jeweils neueste Programm zum Auswerten der Daten.

## Beschreibung

Kraftfahrzeuge müssen in zunehmendem Maße im Hinblick auf bestimmte Werte überprüft werden. Beispielsweise muss in regelmäßigen Abständen eine Überprüfung daraufhin erfolgen, ob bestimmte Abgaswerte überschritten werden. Hierfür gibt es Messgeräte, die mit Hilfe eines Messfühlers, also eines Sensors, die Werte ermitteln und ein Ergebnis ausgeben. Für die Messung jedes zu überprüfenden Parameters muss dabei ein eigenes Messgerät vorhanden sein.

Bei modernen Kraftfahrzeugen kann eine Vielzahl von Funktionen mit Hilfe von Diagnosegeräten überprüft werden, die mit Hilfe eines einzigen Kabels mit einer Steckdose im KFZ verbunden werden. Hierbei muss jedoch an jedem Arbeitsplatz ein vollständiges Diagnosegerät vorhanden sein, das die Messung, die Auswertung und die Anzeige des Ergebnisses durchführt. Solche Diagnosegeräte sind zum Teil auch in der Lage, Änderungen am Kraftfahrzeug über das Diagnosekabel vorzunehmen.

Es ist ebenfalls schon vorgesehen worden, Diagnosegeräte über Datenleitungen mit einer zentralen Datenbank zu verbinden, von der spezifische sich auf ein bestimmtes Modell beziehende Dateien abgerufen werden können.

Weiterhin ist ein Diagnosesystem für ein Kraftfahrzeug bekannt (DE C2 195 22 937), bei dem die über eine Leitung mit der elektronischen Steuereinheit des Kraftfahrzeugs verbundene Diagnoseeinrichtung zusätzlich drahtlos mit einem externen Computer verbunden werden kann. Dieser enthält einen Speicher für Werkstattinformationen. Auch hier erfolgt die Auswertung dezentral in der Nähe des Kraftfahrzeugs.

Der Erfindung liegt die Aufgabe zugrunde, die Wartung und Diagnose von Kraftfahrzeugen bei geringem Aufwand im Hinblick auf eine größere Genauigkeit und die Berücksichtigung neuester Erkenntnisse zu verbessern.

Zur Lösung dieser Aufgabe schlägt die Erfindung eine Anordnung mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Die zu ermittelnden Werte werden über den jeweiligen Anschluss der Anschlusseinrichtung zugeleitet, die beispielsweise einen Messwandler enthält. Anschließend werden die Messwerte, bei denen es sich ja um analoge Spannungs-, Temperatur- oder sonstige Signale handeln kann, in eine normierte Form gebracht, also insbesondere digitalisiert. Dann werden die Messwerte an eine zentrale Auswerteeinrichtung übertragen, die mit den neuesten Erkenntnissen versehen sein kann und die Auswertung der Messwerte übernimmt. Die Ergebnisse dieser Auswertung werden dann an der Stelle, wo die Messwerte ermittelt wurden, ausgegeben bzw. angezeigt.

Die Erfindung macht es möglich, beispielsweise in einer größeren Werkstatt mehrere Arbeitsplätze zur Wartung von Kraftfahrzeugen anzuordnen, wobei eine einzige Auswerteeinrichtung die verschiedenen Arbeitsplätze bedienen kann. Da die Auswerteeinrichtung beispielsweise mit Hilfe eines Computers arbeiten kann, ist es möglich, in einem Zeitscheibenverfahren die Messwerte der einzelnen Arbeitsstationen zu verarbeiten. Es ist nur eine einzige Auswerteeinrichtung erforderlich, die sich mit geringem Aufwand jeweils mit den neuesten Erkenntnissen, auch den neuesten Auswertmöglichkeiten, versorgen lässt.

Erfindungsgemäß kann in Weiterbildung vorgesehen sein, dass die Datenübertragungseinrichtung für die Übertragung der Messwerte auch für die Übertragung der Ergebnisse verwendet wird. Dies verringert den Aufwand gegenüber zwei Übertragungseinrichtungen.

Insbesondere kann in Weiterbildung der Erfindung vorgesehen sein, dass die Datenübertragungseinrichtung im Halbduplex oder Vollduplexverfahren betrieben wird.

Der Anschluss kann beispielsweise eine Steckverbindung sein, die sich für die lösbare Anbringung von Kabeln oder dergleichen anbietet.

Es ist möglich und wird vorgeschlagen, dass der Anschluss einen elektrische Wert überträgt, beispielsweise einen Spannungswert.

Es ist aber ebenfalls möglich, dass der Anschluss einen mechanischen Wert überträgt, beispielsweise einen Druckwert.

In Weiterbildung kann auch vorgesehen sein, dass der Anschluss einen optischen Wert überträgt. Beispielsweise ist es möglich, die korrekte Einstellung von Scheinwerfern oder das korrekte Arbeiten von Blinklampen zu überprüfen. Auch die Helligkeit von Scheinwerfern kann auf diese Weise überprüft werden.

Selbstverständlich kann die Anschlusseinrichtung auch derart ausgebildet sein, dass ein Kabel mit einem Diagnosestecker eines Kraftfahrzeugs verbunden wird.

Erfindungsgemäß kann vorgesehen sein, dass die Anschlusseinrichtung mehrere Anschlüsse zur Aufnahme unterschiedlicher Messwerte aufweist.

Es ist ebenfalls möglich, dass ein Anschluss zur Aufnahme unterschiedlicher Messwerte ausgebildet ist, beispielsweise dadurch, dass er umgeschaltet werden kann.

Insbesondere schlägt die Erfindung vor, dass mit einer Auswerteeinrichtung eine Vielzahl von Anschlusseinrichtungen verbunden wird, die dann gegebenenfalls jeweils wiederum mehrere Anschlüsse aufweisen können.

Die Anzeige der Ergebnisse kann beispielsweise in der gleichen Weise wie bei vorhandenen Diagnosegeräten erfolgen. Es ist jedoch wegen der Verwendung einer einzigen Auswerteeinrichtung für eine Vielzahl von Arbeitsplätzen auch möglich, eine für den Benutzer leichter verständliche Anzeige zu verwirklichen. Beispielsweise ist es auch möglich, an der Anzeigeeinrichtung einen Anschluss für einen handelsüblichen Drucker vorzusehen. Hierbei können detaillierte Angaben sowohl über das Ergebnis als auch über die durchgeführten Auswertungen gemacht werden.

Erfindungsgemäß kann in Weiterbildung vorgesehen sein, dass die Anschlusseinrichtung eine Eingabeeinrichtung zur manuellen Eingabe von zusätzlichen Dateien aufweist. Hier kann beispielsweise der Fahrzeugtyp manuell eingegeben werden, oder auch für eine Protokollierung eines Ergebnisausgangs das Kennzeichen des Kraftfahrzeugs. Dies kann dann bei der Ausgabe des Ergebnisses mit ausgedruckt werden, so dass man ein dokumentiertes Ergebnis hat.

Erfindungsgemäß kann in Weiterbildung vorgesehen sein, dass an der Anschlusseinrichtung ein Adapter zur Anpassung an unterschiedliche Typen von Kraftfahrzeugen angebracht wird.

In nochmaliger Weiterbildung der Erfindung kann eine Korrektureinrichtung vorgesehen sein, die von der Auswerteeinrichtung ansteuerbar ist und nach Bedarf erforderliche Korrekturen an dem zu wartenden Kraftfahrzeug vornimmt. Dabei kann es sich beispielsweise um das Einschreiben von Parametern in eine Steuerung des Kraftfahrzeugs handeln. Es ist aber auch denkbar, dass es sich um ein mechanisch arbeitendes Gerät handelt, das mechanische Korrekturen vornimmt.

In Weiterbildung der Erfindung kann vorgesehen sein, dass die Anordnung eine Einrichtung zum Starten und Durchführen von Testfolgen aufweist, wobei diese Einrichtung von der Auswerteeinrichtung ansteuerbar und auslösbar ist. Dies ermöglicht es, bestimmte Testfolgen durch die Auswerteeinrichtung vornehmen zu lassen, ohne dass speziell geschultes Personal vorhanden sein muss. Insbesondere dann, wenn sich im Lauf der Zeit herausstellt, dass Tests geändert werden müssen, ist auf diese Weise dafür gesorgt, dass die Tests immer auf dem neuesten Stand sind, ohne dass die Personen jeweils neu geschult werden müssen.

In nochmaliger Weiterbildung der Erfindung kann vorgesehen sein, dass die Anschlusseinrichtung auch einen Anschluss zur Abgabe von Steuersignalen an das zu wartende KFZ aufweist. Bei diesen Steuersignalen kann es sich um elektrische Steuersignale, um mechanische Steuersignale oder auch um optische Steuersignale handeln.

Wie bereits erwähnt wurde, ist es möglich, die zentrale Auswerteeinrichtung in einer größeren Werkstatt selbst anzuordnen, d.h. an der Stelle, an der auch die Kraftfahrzeuge stehen und gewartet werden. Dies macht es möglich, die Auswerteeinrichtung beispielsweise in einem geschützten Raum unterzubringen, so dass nur die Anschlusseinrichtung und die Anzeigeeinrichtung an die Bedingungen einer Werkstatt angepasst sein müssen.

Es ist aber ebenfalls möglich, eine zentrale Auswerteeinrichtung an einer vollständig anderen Stelle anzuordnen und die Daten über eine Datenfernübertragung zu übertragen. In diesem Fall kann eine Vielzahl von Wartungsstationen bedient werden. Hier erfolgt nur die Ermittlung der Messwerte dezentral, während die gesamte Auswertung anhand der neuesten Daten und der neuesten Erkenntnisse zentral erfolgt.

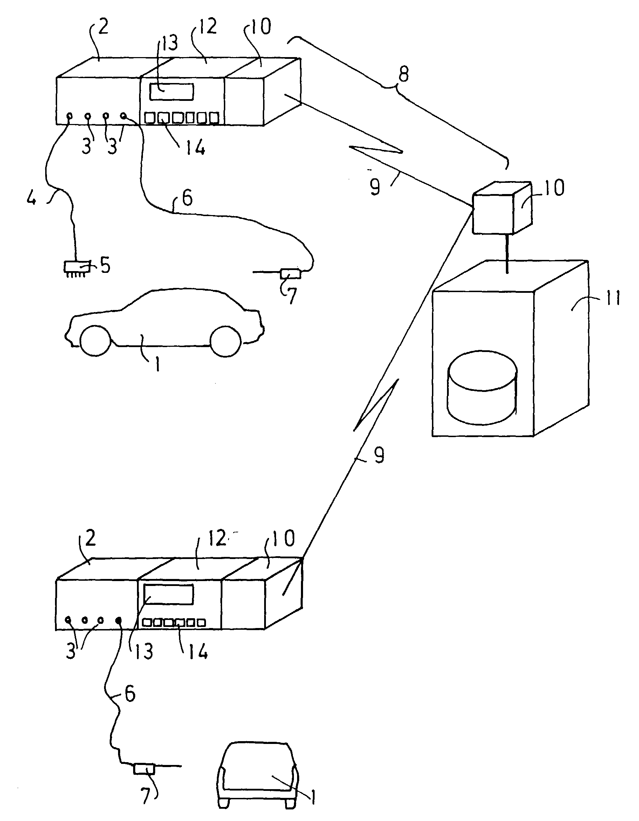

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigt die einzige Figur in einer Übersicht eine Anordnung mit zwei Anschlusseinrichtungen und einer zentralen Auswerteeinrichtung.

Für die Wartung eines Kraftfahrzeugs 1 ist ein Arbeitsplatz vorgesehen, der dazu dient, spezielle Funktionen des Kraftfahrzeugs zu überprüfen. Es wird angenommen, dass es sich bei dem Kraftfahrzeug um ein solches mit einem Diagnosestecker handelt. An dem Arbeitsplatz ist eine Anschlusseinrichtung 2 vorgesehen, die eine Vielzahl von Anschlüssen, im dargestellten Beispiel vier Anschlüsse 3 enthält. An einem der Anschlüsse 3 ist ein Diagnosekabel 4 angeschlossen, an dessen freiem Ende ein Diagnosestecker 5 angebracht ist. Dieser Diagnosestecker 5 kann mit einer Diagnosesteckdose in dem Kraftfahrzeug gekoppelt werden.

An einem anderen Anschluss 3 ist über ein elektrisches Kabel 6 eine Sonde 7 angeschlossen, die beispielsweise dazu verwendet wird, die Abgaswerte des Kraftfahrzeugs zu messen. Hierzu wird die Sonde in den Auspuff des Kraftfahrzeugs eingeführt und dort befestigt.

In der Anschlusseinrichtung 2 ist ein Messwandler vorgesehen, der sowohl die über das Diagnosekabel 4 übertragenen Werte als auch die über das Kabel 6 übertragenen Werte in eine normierte Form umwandelt. Beispielsweise werden alle Werte digitalisiert.

Mit der Anschlusseinrichtung 2 ist eine Datenübertragungseinrichtung 8 verbunden, die beispielsweise zwei über eine Wählleitung 9 verbundene Modems 10 aufweist. Die Datenübertragungseinrichtung 8 verbindet die Anschlusseinrichtung 2 mit einem zentralen Rechner 11, der eine Auswerteeinrichtung für die übertragenen Daten bildet. Von der Anschlusseinrichtung werden die umgewandelten Messwerte zusammen mit Informationen darüber, um welche Arbeitsstation es sich handelt, an den zentralen Rechner 11 übermittelt. Alle von der Anschlusseinrichtung 2 aufgenommenen und über die Datenübertragungseinrichtung 8 übertragenen Daten werden in dem zentralen Rechner 11 ausgewertet. Das Ergebnis der Auswertung wird dann über die gleiche Datenübertragungseinrichtung 8 zurück übertragen und dort einer Anzeigeeinrichtung 12 zugeführt. Die Anzeigeeinrichtung 12 enthält eine Anzeige 13, beispielsweise einen kleinen Bildschirm. Auf diesem werden die Ergebnisse der Auswertung angezeigt. Es kann sich beispielsweise um die Anzeige: "alles in Ordnung" handeln.

An der Anzeigeeinrichtung 12 sind im dargestellten Beispiel noch sechs Drucktasten 14 vorgesehen, die unterschiedliche Funktionen übernehmen können. Beispielsweise kann hier ein Ausdruck des Ergebnisses der Auswertung über einen Drucker abgerufen werden.

Unten in der Figur ist eine zweite ähnlich oder identisch aufgebaute Arbeitsstation dargestellt, die zum Messen eines zweiten Kraftfahrzeugs 1 dienen kann. Auch hier werden die Messwerte dezentral ermittelt, umgewandelt und an den zentralen Rechner 11 übermittelt. Dort erfolgt die vollständige Auswertung. Das Ergebnis der Auswertung wird wieder zu der gleichen Arbeitsstation zurückgemeldet.

## Patentansprüche

1. Anordnung zur Messung und Auswertung von Wartungswerten von Kraftfahrzeugen, mit
1.1 einer Anschlusseinrichtung (2), die
1.1.1 mindestens einen Anschluss (3) zur Aufnahme eines Messwertes aufweist und
1.1.2 den aufgenommenen Messwert in eine normierte Form umwandelt,
1.2 einer Datenübertragungseinrichtung (8), die
1.2.1 mit einem Ausgang der Anschlusseinrichtung (2) verbunden ist und
1.2.2 die umgewandelten Messwerte zu einer zentralen Auswerteeinrichtung überträgt,
1.3 einer Anzeigeeinrichtung (12), die
1.3.1 der Anschlusseinrichtung (2) zugeordnet und
1.3.2 über eine Datenübertragungseinrichtung (8) mit der Auswerteeinrichtung verbunden ist, sowie mit
1.4 einer Auswerteeinrichtung, die
1.4.1 die übertragenen Messwerte auswertet und
1.4.2 mit dem Ergebnis der Auswertung die Anzeigeeinrichtung (12) ansteuert.

2. Anordnung nach Anspruch 1, bei der eine Datenübertragungseinrichtung (8) für die Übermittlung der Messwerte und die Übermittlung der Ergebnisse der Auswertung vorgesehen ist.

3. Anordnung nach Anspruch 1 oder 2, bei der die Datenübertragungseinrichtung (8) im Halbduplex-Verfahren oder im Vollduplexverfahren betrieben wird.

4. Anordnung nach einem der vorhergehenden Ansprüche, bei der ein Anschluss (3) eine Steckverbindung aufweist.

5. Anordnung nach einem der vorhergehenden Ansprüche, bei der ein Anschluss (3) einen elektrischen Wert überträgt.

6. Anordnung nach einem der vorhergehenden Ansprüche, bei der ein Anschluss (3) einen mechanischen Wert überträgt.

7. Anordnung nach einem der vorhergehenden Ansprüche, bei der ein Anschluss (3) einen optischen Wert überträgt.

8. Anordnung nach einem der vorhergehenden Ansprüche, bei der ein Anschluss (3) für einen Diagnosestecker vorgesehen ist.

9. Anordnung nach einem der vorhergehenden Ansprüche, bei der die Anschlusseinrichtung (2) mehrere Anschlüsse (3) zur Aufnahme unterschiedlicher Messwerte aufweist.

10. Anordnung nach einem der vorhergehenden Ansprüche, bei der ein Anschluss (3) zur Aufnahme unterschiedlicher Messwerte ausgebildet, insbesondere umschaltbar ist.

11. Anordnung nach einem der vorhergehenden Ansprüche, mit einer Vielzahl von Anschlusseinrichtungen (2), die mit der einen Auswerteeinrichtung verbunden sind.

12. Anordnung nach einem der vorhergehenden Ansprüche, bei der die Anzeigeeinrichtung (12) einen Anschluss für einen Drucker aufweist.

13. Anordnung nach einem der vorhergehenden Ansprüche, mit einer mit der Anschlusseinrichtung (2) verbundenen Eingabeeinrichtung zur manuellen Eingabe von zusätzlichen Daten.

14. Anordnung nach einem der vorhergehenden Ansprüche, mit einem Adapter zur Anpassung an unterschiedliche Typen von Kraftfahrzeugen.

15. Anordnung nach einem der vorhergehenden Ansprüche, mit einer Korrektureinrichtung, die von der Auswerteeinrichtung ansteuerbar ist und nach Bedarf Korrekturen an dem zu wartenden Kraftfahrzeug vornimmt.

16. Anordnung nach einem der vorhergehenden Ansprüche, mit einer Einrichtung zum Starten und Durchführen von Testfolgen, die von der Auswerteeinrichtung ansteuerbar und auslösbar ist.

17. Anordnung nach einem der vorhergehenden Ansprüche, mit einem Anschluss zur Abgabe von Steuersignalen an das zu wartende Kraftfahrzeug.

18. Anordnung nach Anspruch 17, bei der ein Steuersignal elektrisch ist.

19. Anordnung nach Anspruch 17 oder 18, bei der ein Steuersignal mechanisch ist.

20. Anordnung nach einem der Ansprüche 17 bis 19, bei der ein Steuersignal optisch ist.

21. Anordnung nach einem der vorhergehenden Ansprüche, bei der die zentrale Auswerteeinrichtung an der gleichen Stelle angeordnet ist wie die Anschlusseinrichtungen (2).

22. Anordnung nach einem der Ansprüche 1 bis 20, bei der die zentralen Auswerteeinrichtung an einer entfernten Stelle angeordnet ist und über Datenfernübertragung mit den Anschlusseinrichtungen (2) und den Anzeigeeinrichtungen (12) verbunden ist.
